Europäisches Patentamt

European Patent Office

Office européen des brevets

(11) Publication number: **0 491 052 A1**

## EUROPEAN PATENT APPLICATION
### published in accordance with Art. 158(3) EPC

(21) Application number: **91911752.3**

(22) Date of filing: **03.07.91**

(86) International application number:
**PCT/JP91/00897**

(87) International publication number:
**WO 92/00825 (23.01.92 92/03)**

(30) Priority: **04.07.90 JP 177800/90**

(43) Date of publication of application:
**24.06.92 Bulletin 92/26**

(84) Designated Contracting States:
**CH DE FR GB IT LI**

(51) Int. Cl.⁵: **B23H 3/00, B23H 9/00, B23H 7/22**

(72) Inventor: **KUWABARA, Youhei, 1180-4, Takao Hukuroi-shi**
**Shizuoka 437(JP)**
Inventor: **MORIYA, Masayoshi, 1220-1, Kaminobe Toyooka-mura**
**Iwata-gun**
**Shizuoka 438-01(JP)**

(71) Applicant: **SHIZUOKA SEIKI CO. LTD.**
**4-1 Yamanacho**
**Hukuroi-shi, Shizuoka 437(JP)**

(74) Representative: **BATCHELLOR, KIRK & CO.**
**2 Pear Tree Court Farringdon Road**
**London EC1R 0DS(GB)**

(54) **METHOD OF FINISHING GEAR BY ELECTROLYTICALLY MACHINING AND METHOD OF MACHINING ELECTRODE USED THEREIN.**

(57) This invention is characterized in that a semi-finished electrode (42) is made according to a master gear (28) and an electrode is made by finishing electrolytically the semi-finished electrode (42), a work made in the same shape as that of the master gear (28) and the electrode are so placed as to face each other with a predetermined gap, and the work is finished.

FIG.6

TECHNICAL FIELD

The present invention relates to a method of finishing a surface of a bevel gear in particular by electrolytic machining, and a method of machining an electrode used for the electrolytic finishing necessary to achieve the method.

BACKGROUND ART

The hypoid gear (special bevel gear) is widely used in a power transmission system for automobiles, and worked by a special working machine only for the hypoid gear. A gear-cutting machining (hypoid generator) developed by William Gleason Company is typical of the machine. The hypoid gear comprises a ring gear and a drive pinion and the gear and pinion are coupled after quenching and finished by lapping process. This is only the way to finish the hypoid gear in the prior art.

As a finishing machining of a hard material difficult in machining, grinding machining is used with a grinding wheel. The grinding wheel must be periodically dressed with a dresser such as a diamond strip or a tungsten carbide chip for restoring its original shape and sharpness and removing foreign materials charged in the surface of the wheel. However, it is difficult to restore the shape of the grinding wheel unless the wheel has a continuous outer profile. The hypoid gear is produced by a generating process of a cutter-spindle with a rotating tool having special blades. Therefore, it is difficult to provide a grinding wheel having a high rigidity and a shape of the hypoid gear and a dresser for the grinding wheel. Consequently, the grinding machining is not used for finishing the hypoid gear.

The hypoid gear finished by the lapping operation is low in the dimensional accuracy. Therefore, a couple of component gears of the hypoid gear which are machined at the same time are stored and managed as a coupled unit in order to ensure the combination. However, such a management is troublesome and a large space is necessary for storing the parts. The gear unit must be exchanged with another coupled gear as a unit, which increases the cost and labor of exchanging operation.

Japanese Patent Application Laid-Open 1-115516 discloses an electrolytic finishing method of a gear in which the surface of the gear is finished by electrolytic process. However the work is unevenly processed, and hence the surface of the gear can not be uniformly finished.

An object of the present invention is to provide an electrolytic finishing method of a bevel gear which eliminates the above described disadvantages and to provide a finishing method of an electrode used in the method.

Here, the bevel gear includes a spiral bevel gear and a worm gear as well as the hypoid gear.

DISCLOSURE OF THE INVENTION

The method of finishing a bevel gear by electrolytic machining according to the present invention is characterized by molding an intermediate electrode by using a model gear as a mold, finishing the intermediate electrode by electrolytic machining with the model gear for forming an electrode, positioning the electrode and a work having the substantially same configuration as the model gear in an electrolyte tank to form a predetermined gap between the electrode and the work, supplying electrolyte to the gap, and applying pulses having predetermined current density and pulse duration to the electrode as a negative pole and the work as a positive pole for finishing the work.

In an aspect of the invention, the method further comprises moving the work to another position after completion of the finishing machining of the work from the electrode, positioning another work corresponding to the electrode, and cleaning the moved work.

In another aspect, there is provided a method of machining an electrode used in a method of finishing a bevel gear by an electrolytic machining comprising molding an intermediate electrode by using a model gear as a mold, positioning the intermediate electrode and the model gear in an electrolyte tank to form a predetermined gap between the electrode and the model gear, supplying electrolyte to the gap, and applying pulses having predetermined current density and pulse duration to the intermediate electrode as a positive pole and the model gear as a negative pole for finishing the electrode.

BRIEF DESCRIPTION OF THE DRAWINGS

Fig. 1 is a schematic illustration showing a system of an electrolytic finishing machine according to the present invention;
Figs. 2 and 3 are explanatory views showing an electrolytic machining of the present invention;
Fig. 4 is a plan view showing a state for molding an electrode by a bevel gear as a model taken along a line IV-IV of Fig. 5;
Fig. 5 is a sectional side view taken along a line V-V of Fig. 4;
Fig. 6 is a schematic view showing the electrolytic machining;
Fig. 7 is a schematic illustration showing a second embodiment of the system; and
Fig. 8 is an enlarged side view showing a main part of the second embodiment, partly shown in section.

## BEST MODE FOR EMBODYING THE INVENTION

The present invention will be described hereinafter in detail with reference to the accompanying drawings.

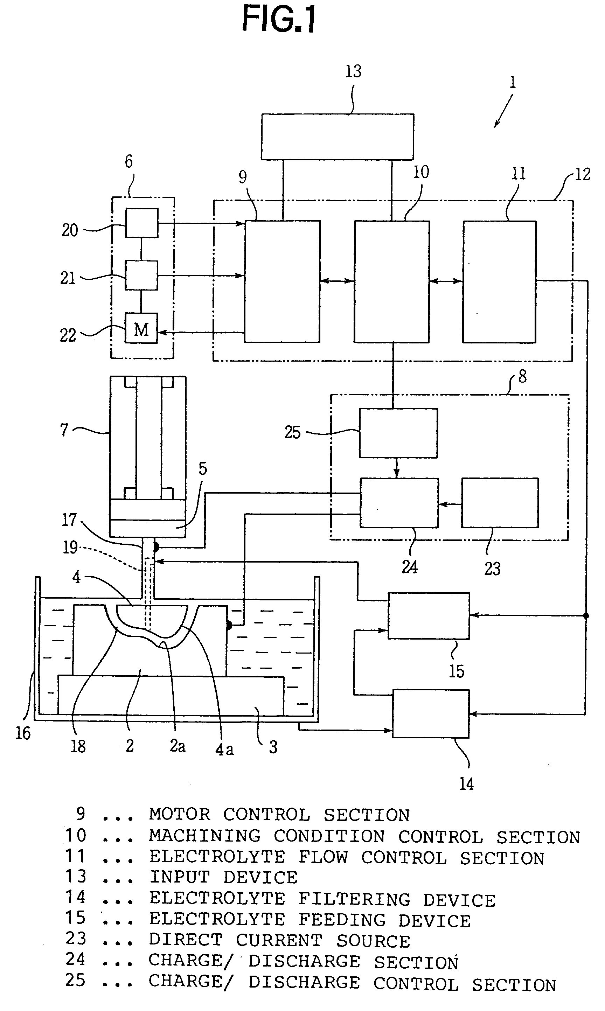

Fig. 1 shows a known electrolytic finishing system of the present invention.

Referring to Fig. 1, an electrolytic finishing machine 1 has a work fixing device 3 for fixing a work 2, an electrode holding device 5 for holding an electrode 4, an electrode driving direction converter 7 for changing rotary output of an electrode driving device 6 into an axial movement, a power source device 8 for generating a pulse, a control unit 12 having a motor control section 9, a machining condition control section 10, and an electrolyte flow control section 11, an input device 13 for inputting data for machining conditions of the work 2, an electrolyte filtering device 14, an electrolyte feeding device 15, and an electrolyte tank 16.

Here, the work 2 and the electrode 4 are shown in general use.

The work fixing device 3 is a table made of insulation such as granite and ceramic material on which the work 2 machined at electrical discharge machining is fixed through a bolt (not shown).

The electrode 4 made of copper which was used at electrical discharge machining is secured to the lower end of a rod 17 of the electrode holding device 5 so as to form a predetermined gap 18 between an electrode surface 4a and a work surface 2a at an equal three-dimensional distance there-between. A passage 19 is formed in the rod 17 passing through the electrode 4. An end of the passage 19 is opened to the gap 18. The holding device 5 is operatively connected to the electrode driving device 6 through the converter 7 so that the device 5 is vertically moved for moving the electrode 4 to maintain the gap 18 at a predetermined value.

The driving device 6 has a rotary encoder 20, a tacho-generator 21 and a motor 22. Output signals of the encoder 20 and the tacho-generator 21 are supplied to the motor control section 9 of the control unit 12, and the motor 22 is operated by a control signal from the motor control section 9. The converter 7 is arranged to change rotary output of the motor 22 in the device 6 into axial movement of the rod 17 so that the device 5 is vertically moved.

The power source device 8 comprises a direct current source 23, a charge/discharge section 24, and a charge/discharge control section 25 for controlling the charge/discharge section 24. The charge/discharge section 24 generates a pulse of a current density (specifically means "average current density") of 70A/cm² or less for a pulse duration dependent on the surface area of the work 2, in response to signals from the machining condition control section 10.

The input device 13 is arranged to input various machining condition signals which are fed to the motor control section 9 and the machining condition control section 10. The electrolyte flow control section 11 is arranged to control the electrolyte filtering device 14 and the electrolyte feeding device 15 based on control signals from the control section 10.

The electrolyte filtering device 14 is operated for filtering the electrolyte including residual products produced by machining operation. The electrolyte including residual products is removed from the electrolyte tank 16 by a pump (not shown) of the device 14 and filtering in the device 14. The electrolyte is fed to the feeding device 15 which is operated to feed the clean electrolyte to the passage 19 in the rod 17 and the electrode 4. The electrolyte is injected from the end opening of the passage 19 to the gap 18 between the electrode 4 and the work 2.

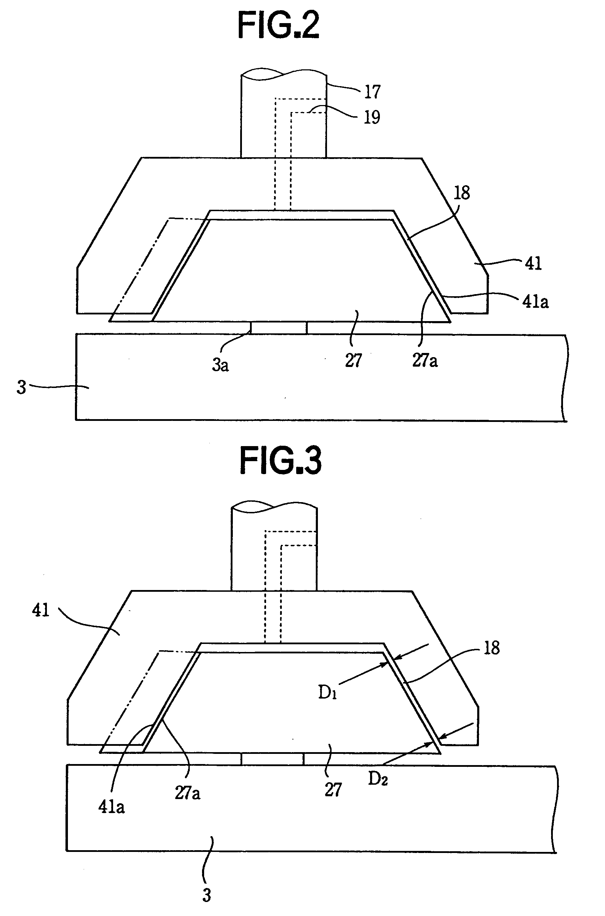

An experiment conducted by the inventors of the present invention will be describe hereinafter with reference to Figs. 2 and 3.

As a work 27, a drive pinion of a hypoid gear was fixed to the work fixing device 3. The drive pinion had been quenched after generating machining by a gear-cutting machine. An electrode 41 having a configuration corresponding to the work 27 was attached to the rod 17 of the electrode holding device 5. The teeth of the hypoid gear were spiral in its axial direction. Therefore, the work 27 and the electrode 41 were rotated in the opposite directions by the motor 22, while the electrode 41 was lowered to provide a predetermined uniform gap 18 between the work and the electrode. In order to fill the tank with electrolyte and remove the residual products, the electrolyte was continuously fed to the gap 18 through the passage 19 by the feeding device 15 during the machining operation.

A predetermined pulse current was applied to the electrode 41 as a negative pole and the work 27 as a positive pole by the charge/discharge section 24 of the power source device 8 based on the control signal from the machining condition control section 10.

A pulse having a current density between 30 A/cm² and 50 A/cm², and a pulse duration of 20 msec or less was applied for improving surface roughness of the work 27. A pulse having a current density between 30 A/cm² and 50 A/cm², and a pulse duration between 20 msec and 70 msec was applied for finishing the work 27 to a lustrous surface.

In the machining operation, a following defect has arisen. As shown in Fig. 3, in the gap 18 between a surface 41a of the electrode 41 and a surface 27a of the work 27, a difference was made between an upstream gap distance D1 and a downstream gap distance D2 along the electrolyte flow. The upstream gap distance D1 becomes larger than the downstream gap distance D2 (D1>D2).

The distance of gap 18 is actually 0.1 mm which causes a high resistance to flow. Further, the electrolyte includes residual products and hydrogen gas produced on the surface 41a of the electrode 41. Consequently, as the electrolyte flows from upstream to downstream of the gap, the concentration of residual products and hydrogen gas in the electrolyte increases, thereby increasing the electric resistance between the electrode and the work. Consequently, the electric energy is not sufficiently used to the machining operation.

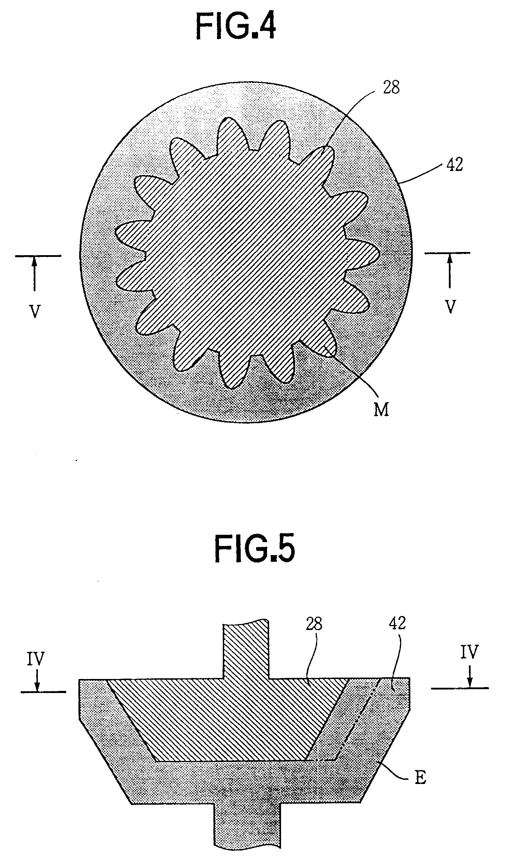

The present invention solves such a problem. An embodiment of the present invention will be described with reference to Figs. 4 and 5.

It is difficult to make the electrode 41 by cutting machining because of its special configuration. The present invention enables manufacturing such a complicated work.

As shown in Figs. 4 and 5, a work 28 as a model of the hypoid drive gear is made by cutting machining with a precise dimension. Then, an electrode 42 made of copper or graphite is molded, by using the model work 28 as a mold by electrochemical molding or other moldings.

The model work 28 and the electrode 42 which are engaged with each other in the machining are relatively rotated in the opposite directions, so that they are separated from each other. Thus, the electrode 42 as an intermediate product is obtained.

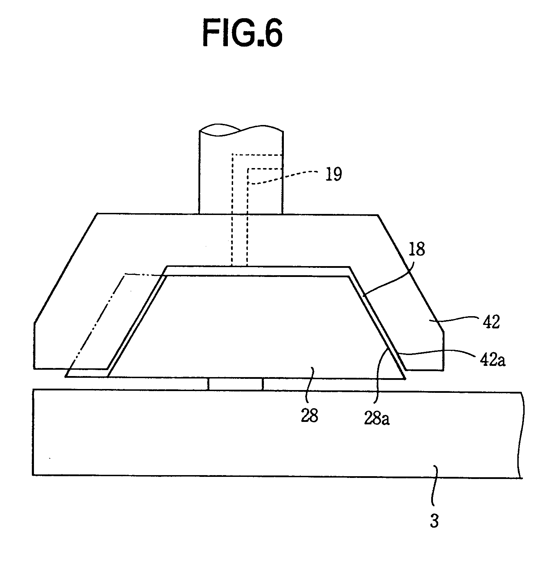

As shown in Fig. 6, the work 28 and the intermediate electrode 42 are attached to the fixing device 3 and the holding device 5, respectively. The positions of the work and the electrode are adjusted to provide an initial gap of 100 $\mu$m between a surface 28a of the work 28 and a surface 42a of the electrode 42. In this state, the polarities of the electrode and the work connected to the charge/discharge section 24 are changed. Namely, the electrode 42 is set to a positive pole, and hence the work 28 acts as a negative pole. The pulse current is applied, while the electrolyte is continuously fed through the passage 19 in the electrode 42. It is preferable to supply a pulse of the current density between 30 A/cm$^2$ and 50 A/cm$^2$ and pulse duration between 10 msec and 30 msec. By the electrolytic process, the upstream gap D1 becomes larger than the downstream gap D2. Namely, the surface of the electrode 42 at upstream of the electrolyte flow is eroded larger than the surface at downstream of the electrolyte flow.

During the process, the electrode 42 is lowered from the initial position to reduce the gap, so that a desired finished surface of the electrode 42 is obtained. Alternatively, the gap 18 is adjusted at every one cycle or several cycles to maintain the gap at a predetermined value.

The finished electrode 42 is attached to the holding device 3 corresponding to the work 27 to be finished and lowered to the work 27 providing with the gap 18. In this state, the upstream gap D1 of the gap 18 is larger than the downstream gap D2. Predetermined pulses are applied to perform the finishing machining. Because of the nature of the conductive electrolyte, the work 27 is eroded inversely proportional to the distance of the gap. Thus, the surface of the work at upstream of the electrolyte flow is less machined than the surface at downstream of the electrolyte flow.

It was found by experiments that the work surface was uniformly finished over the gap irrespective of upstream and downstream of the electrolyte flow.

In accordance with the present invention, it is possible to finish the surface of the bevel gear having a special configuration such as a hypoid gear with using the electrode finished by the electrolytic finishing machining. It is also noted that in the electrolytic process, the electrolyte at finishing the work 27 is fed in the same direction as at finishing the electrode 42. Further, it is important that the difference between the distance of the gaps D1 and D2, that is the inclination of the surface of the gap is properly set, so that finishing machining can be accurately performed.

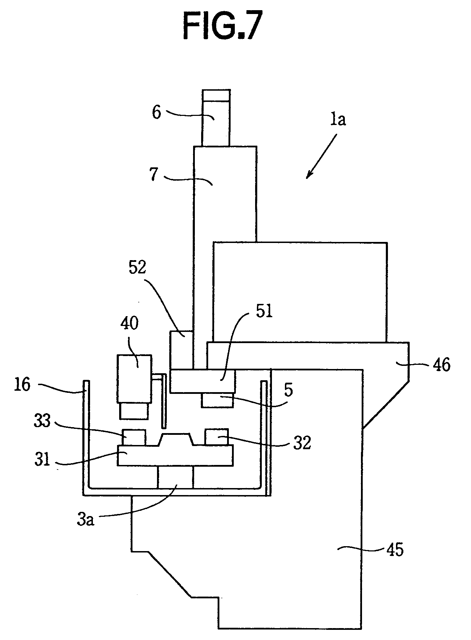

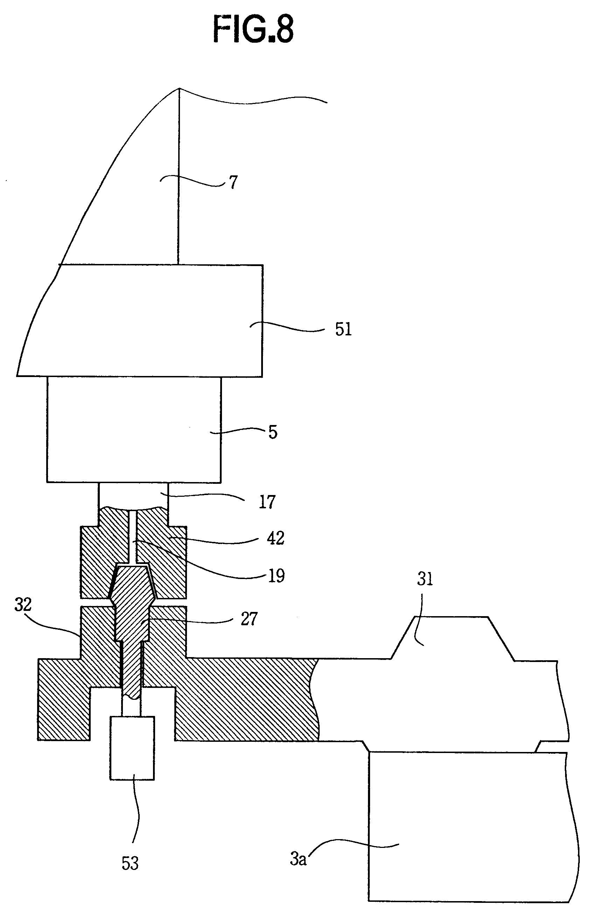

Figs. 7 and 8 show the second embodiment of the present invention.

Referring to Fig. 7, an electrolyte finishing machine 1a comprises a head 45 for supporting the electrolyte tank 16. In the tank 16, a work fixing device 3a and a work fixing table 31 are provided. The table 31 is mounted on the device 3a to be rotatable about the vertical axis of the device 3a. A rotating member 52 is rotatably mounted on a frame 46 secured to the head 45. The rotating member 52 is rotatable about its vertical axis and has a plate 51 secured to the underside thereof. The electrode holding device 5 connected to the converter 7 is secured to the plate 51. Thus, the holding device 5 is rotatable about the rotating member 52.

The work fixing table 31 has a pair of work fixing portions 32 and 33 for the work 27. When the portion 32 is positioned corresponding to the electrode holding device 5, the portion 33 is adapted to be positioned corresponding to a cleaning device 40 which is independently provided from the work fixing device 3a. The cleaning device 40 is provided for ejecting cleaning water to wash out the electrolyte adhered on the work 27. In place of the device 40, a movable nozzle may be employed for ejecting the cleaning water. In order to prevent the cleaning water from mixing with the electrolyte which is applied to the gap from the passage in the electrode 42, it is necessary to provide a partition for surrounding the cleaning device 40.

Referring to Fig. 8, the work fixing portion 32 is provided with a chuck 53 for fixing the work 27 to the portion 32. The chuck 53 is made of conductive material to transmit the current to the work 27.

The other constructions are the same as the first embodiment, so that descriptions thereof are omitted.

Describing the machining method, the electrode 42 is attached to the rod 17 of the holding device 5 and the work 27 is attached to the work fixing portion 32 of the table 31 through the chuck 53. The work 27 is set to the predetermined position. The rotating member 52 is rotated to rotate the plate 51 so as to correspond the electrode 42 secured to the device 5 to the work 27. Then, the device 5 is lowered for providing the gap between the electrode 42 and the work 27 to a predetermined value of 0.1 mm. Such operations can be automatically performed with accuracy by means of an NC device.

The electrolyte is supplied to the gap and a predetermined pulse current is applied for finishing the work with a predetermined accuracy.

After the machining process, the table 31 is rotated, so that another work 27 which is previously attached to the work fixing portion 33 is positioned corresponding to the electrode 42, while the finished work 27 on the portion 32 is positioned corresponding to the cleaning device 40. When the finished work 27 reaches a predetermined cleaning position, the cleaning device 40 is automatically operated to eject the cleaning water to the work 27 for cleaning the electrolyte on the work. The table 31 is further rotated to locate the finished work 27 at a predetermined position where the work 27 is removed from the table 31. Thus, the finishing machining is completed.

In the embodiment, if a robot is used for attaching the work 27 to or detaching the work from the table 31 automatically, the number of work fixing portions on the table can be increased more than two.

In order to automate the entire finishing machining process, the positioning of the electrode and the work, the cleaning of the work by the cleaner, and the attachment and detachment of the work are individually programmed and proper sensors are provided for numerically controlling the process.

In the embodiment, an electric connecting device to be connected to the work fixing table 31 is adapted to be retracted from the table to permit the table to rotate when the table 31 is rotated. When the table 31 is stopped, the electric device is projected by a projecting mechanism (not shown) to the table, thereby electrically connecting the electric device to the table through conductive members which are provided on both of the table and the electric device.

The electrolytic finishing method of the present invention can be used for finishing other types of the bevel gears such as a spiral bevel gear and a straight bevel gear.

PROBABILITY OF INDUSTRIAL EXPLOITATION

In accordance with the present invention, the work is finished to the surface roughness lower than 1 $\mu$m of Rmax. Even if each gear has a different dimension caused by the strain at quenching, the dimensional accuracy of the gear is finally stabilized.

Accordingly, the ring gear and the drive pinion of the hypoid gear can be separately stored. Thus, the number of the stock can be reduced, changing operation of the gear is simplified, and hence the cost is lowered.

By the improved surface roughness of the work, noises during the driving of a motor vehicle at high speed is remarkably reduced, and the transmitting efficiency of the power is improved.

Since carbon layer is removed from the work by the electrolytic machining and notches caused by the cutting machining are eliminated, the strength of the gear is increased. Therefore, the size of the gear can be reduced to reduce the weight thereof.

The electrode molded as a mold is hardly worn, so that it is possible to perform a sequential automatic finishing machining, thereby finishing the surface of the gear at higher speed, reducing the manufacturing cost gear and stabilizing the quality of the gear.

**Claims**

1. A method of finishing a bevel gear by electrolytic machining comprising: the steps of

molding an intermediate electrode by using a model gear as a mold;

finishing the intermediate electrode by electrolytic machining with the model gear for forming an electrode;

positioning the electrode and a work having the substantially same configuration as the model gear in an electrolyte tank to form a predetermined gap between the electrode and the work;

supplying electrolyte to the gap; and

applying pulses having predetermined current density and pulse duration to the electrode as a negative pole and the work as a positive pole for finishing the work.

2. A method according to claim 1 further comprising moving the work to another position after completion of the finishing machining of the work from the electrode;

positioning another work corresponding to the electrode; and

cleaning the moved work.

3. A method of machining an electrode used in a method of finishing a bevel gear by electrolytic machining comprising: the steps of

molding an intermediate electrode by using a model gear as a mold;

positioning the intermediate electrode and the model gear in an electrolyte tank to form a predetermined gap between the electrode and the model gear;

supplying electrolyte to the gap; and

applying pulses having predetermined current density and pulse duration to the intermediate electrode as a positive pole and the model gear as a negative pole for finishing the electrode.

# FIG.1

```
 9 ... MOTOR CONTROL SECTION
10 ... MACHINING CONDITION CONTROL SECTION
11 ... ELECTROLYTE FLOW CONTROL SECTION
13 ... INPUT DEVICE
14 ... ELECTROLYTE FILTERING DEVICE
15 ... ELECTROLYTE FEEDING DEVICE
23 ... DIRECT CURRENT SOURCE
24 ... CHARGE/ DISCHARGE SECTION
25 ... CHARGE/ DISCHARGE CONTROL SECTION
```

# FIG.2

# FIG.3

# FIG.4

# FIG.5

# FIG.6

# FIG.7

# FIG.8

# INTERNATIONAL SEARCH REPORT

International Application No PCT/JP91/00897

**I. CLASSIFICATION OF SUBJECT MATTER** (if several classification symbols apply, indicate all) ⁶

According to International Patent Classification (IPC) or to both National Classification and IPC

Int. Cl⁵ B23H3/00, 9/00, 7/22

**II. FIELDS SEARCHED**

| Minimum Documentation Searched ⁷ | |
|---|---|
| Classification System | Classification Symbols |
| IPC | B23H3/00, 3/04, 9/00 |

Documentation Searched other than Minimum Documentation
to the Extent that such Documents are Included in the Fields Searched ⁸

| | |
|---|---|
| Jitsuyo Shinan Koho | 1926 – 1991 |
| Kokai Jitsuyo Shinan Koho | 1971 – 1991 |

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| Y | JP, B2, 63-54486 (Daimler-Benz AG), October 28, 1988 (28. 10. 88), Lines 4 to 28, column 5, lines 1 to 8, column 6, Figs. 1 to 3 & DE, C1, 3528056 & US, A, 4705615 & FR, B1, 2585601 & GB, B2, 2178685 | 1-3 |
| Y | JP, A, 63-196327 (Honda Motor Co., Ltd.), August 15, 1988 (15. 08. 88), Lines 6 to 17, upper left column, lines 1 to 5, upper right column, lower left column, page 4, Figs. 1 to 3 (Family: none) | 1-3 |
| Y | JP, B2, 50-14618 (Mitsubishi Electric Corp.), May 29, 1975 (29. 05. 75), Lines 23 to 37, column 2, lines 1 to 10, columns 3, 4, Fig. 2 (Family: none) | 1-3 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 20, 1991 (20. 09. 91) | October 14, 1991 (14. 10. 91) |

| International Searching Authority | Signature of Authorized Officer |
|---|---|
| Japanese Patent Office | |

Form PCT/ISA/210 (second sheet) (January 1985)